# EUROPÄISCHE PATENTSCHRIFT

(11) **EP 4 384 431 B1**
(45) Veröffentlichungstag und Bekanntmachung des Hinweises auf die Patenterteilung: **04.03.2026**
(21) Anmeldenummer: 22761516.8
(22) Anmeldetag: 04.08.2022
(51) Int. Cl.: B62B 9/22, B62B 9/08, B62B 9/00, B62B 5/00

(54) **KINDERWAGEN UND VERFAHREN ZUM AUTOMATISCHEN SCHAUKELN**
PRAM AND METHOD FOR AUTOMATIC ROCKING
LANDAU ET PROCÉDÉ DE BASCULEMENT AUTOMATIQUE

(30) Priorität: 10.08.2021 DE 102021120796
(43) Veröffentlichungstag der Anmeldung: 19.06.2024
(73) Patentinhaber: CYBEX GmbH, 95448 Bayreuth (DE)
(72) Erfinder: SPOUR, Jiri, 25241 Zlatniky-Hodkovice (CZ)
(74) Vertreter: Meissner Bolte Partnerschaft mbB
(86) Internationale Anmeldenummer: PCT/EP2022/071972
(87) Internationale Veröffentlichungsnummer: WO 2023/016922

(56) Entgegenhaltungen:
- WO-A1-2020/076227
- DE-A1- 102004 001 015
- DE-A1- 102019 133 309
- US-A- 3 820 614

## Beschreibung

Die Erfindung betrifft einen Kinderwagen und ein Verfahren zum automatischen Schaukeln. Ein Kinderwagen mit den Merkmalen des Oberbegriffs des Anspruchs 1 ist beispielsweise aus WO 2020/076227 A1 bekannt.

Bei dem bekannten Kinderwagen der DE 10 2008 039 599 A1 ist ein Antrieb vorgesehen, der zur kurzzeitigen Unterstützung des Schiebeantriebs, zur Schaukelfunktion, und zum Herauf- und Herunterfahren des Sitzes oder Bettchens eingeschaltet werden kann, wobei die Mechanik mit Blick auf die Veränderung der Höhenposition des Sitzes bzw. Bettchens beschrieben ist. Diese sind über einen steifen Gurt an den Oberteilen zweier teleskopischer, durch Spindelantrieb betätigter Arme befestigt, die die Oberteile mit dem Fahrgestell des Wagens verbinden.

EP 2 818 382 A1 offenbart einen weiteren motorisierten Kinderwagen, der mit einem Antrieb zur Unterstützung beim Schieben des Kinderwagens ausgestattet ist. In der EP 2 818 382 A1 steht die Ansteuerung des Antriebs im Zusammenhang mit der Schiebekraft im Vordergrund. Fig. 1 (Stand der Technik) zeigt den Aufbau des aus der EP 2 818 382 A1 bekannten Kinderwagens, der ein Gestell mit Rädern, einen mit dem Gestell verbundenen Kinderwagenaufsatz und einen Schieber zum Schieben des Kinderwagens aufweist. Der Antrieb des bekannten Kinderwagens im unteren Bereich des Gestells ist schematisch dargestellt.

Weitere Kinderwägen mit Schaukelfunktion sind aus der DE 10 2019 133 309 A1 und der US 3,820,614 A bekannt.

Aus dem eingangs genannten, gattungsgemäßen Stand der Technik ist es zwar bekannt, den für die Schiebeunterstützung vorgesehenen Antrieb zusätzlich auch dazu zu verwenden, um den Kinderwagen automatisch zu schaukeln. Allerdings kommt es bei dem motorunterstützten, automatischen Schaukeln nicht nur darauf an, die Schaukelbewegung als solche zu erzeugen, sondern auch darauf, dass die Schaukelbewegung sicher handhabbar ist und das im Kinderwagenaufsatz liegende Kind beruhigt oder sogar in den Schlaf wiegt.

Die Aufgabe der Erfindung ist es, den eingangs genannten, bekannten Kinderwagen dahingehend zu verbessern, dass eine möglichst sichere und praxistaugliche automatische Schaukelfunktionen mithilfe des Antriebs implementiert wird, die ohne manuelle Zuhilfenahme die gewünschte Schaukelbewegung des Kinderwagens ermöglicht. Eine weitere Aufgabe der Erfindung besteht darin, ein entsprechendes Verfahren zum automatischen Schaukeln eines Kinderwagens anzugeben.

Erfindungsgemäß wird diese Aufgabe mit Blick auf den Kinderwagen durch den Gegenstand des Anspruchs 1 und mit Blick auf das Verfahren durch den Gegenstand des Anspruchs 16 gelöst.

Konkret wird die Aufgabe durch einen Kinderwagen mit einem Gestell gelöst, das einen Schieber und Räder zum Fahren des Kinderwagens aufweist. Der Kinderwagen weist einen Antrieb, der mit wenigstens einem der Räder antriebsverbunden ist, und eine Bremseinrichtung für wenigstens ein Rad auf. Die Bremseinrichtung ist in einen Fahrzustand mit freier Radrotation und in einen Bremszustand mit wenigstens einem gebremsten Rad (ggf. mehreren gebremsten Rädern) überführbar. Der Antrieb ist für eine automatische Schaukelfunktion des Kinderwagens betätigbar. Das (jeweilige) durch die Bremseinrichtung gebremste Rad ist im Bremszustand zum automatischen Schaukeln in beiden Radumfangsrichtungen begrenzt rotierbar.

Die Erfindung hat den Vorteil, dass das in der Praxis typische Schaukeln zum Beruhigen des Kindes durch sanftes Vor- und Zurückfahren des Kinderwagens simuliert werden kann. Dies wird dadurch erreicht, dass die Bremseinrichtung im Bremszustand eine Teilrotation der Räder erlaubt. Die Teilrotation bewirkt, dass der Kinderwagen eine begrenzte Fahrstrecke bewegt werden kann. Dazu ist das durch die Bremseinrichtung gebremste Rad im Bremszustand in beiden Radumfangsrichtung begrenzt rotierbar. Durch die Begrenzung der Rotationsbewegung der Räder wird im gebremsten Zustand ein Bewegungsrahmen geschaffen, der durch den Antrieb des Kinderwagens für die Schaukelbewegung genutzt werden kann. Dabei ist die Teilrotation des gebremsten Rades in beiden Radumfangsrichtungen begrenzt. Dadurch wird die Simulation einer iterativen, reziproken Fahrbewegung, also die in der Praxis typische Hin- und Herbewegung des Kinderwagens ermöglicht. Gleichzeitig wird für die Sicherheit der Schaukelbewegung gesorgt, weil die Bremseinrichtung sich beim automatischen Schaukeln im Bremszustand befindet und eine freie, ungebremste Radrotation verhindert.

Die freie Radrotation entspricht dem Fahrzustand, bei der die Bremseinrichtung vollständig gelöst ist, sodass die Räder frei drehen können. Im Unterschied dazu ist im Bremszustand nur eine Teilrotation der Räder möglich, die die für die Schaukelbewegung erforderliche begrenzte Hin- und Herbewegung des Kinderwagens zulässt. Das beim manuellen Schaukeln durch die Muskelkraft bedingte, sich wiederholende Abbremsen des Kinderwagens wird von der Bremseinrichtung übernommen. Die Erfindung bietet damit die Voraussetzung für eine automatische, motorunterstützte Schaukelbewegung, die an der natürlichen, manuellen Schaukelbewegung orientiert ist.

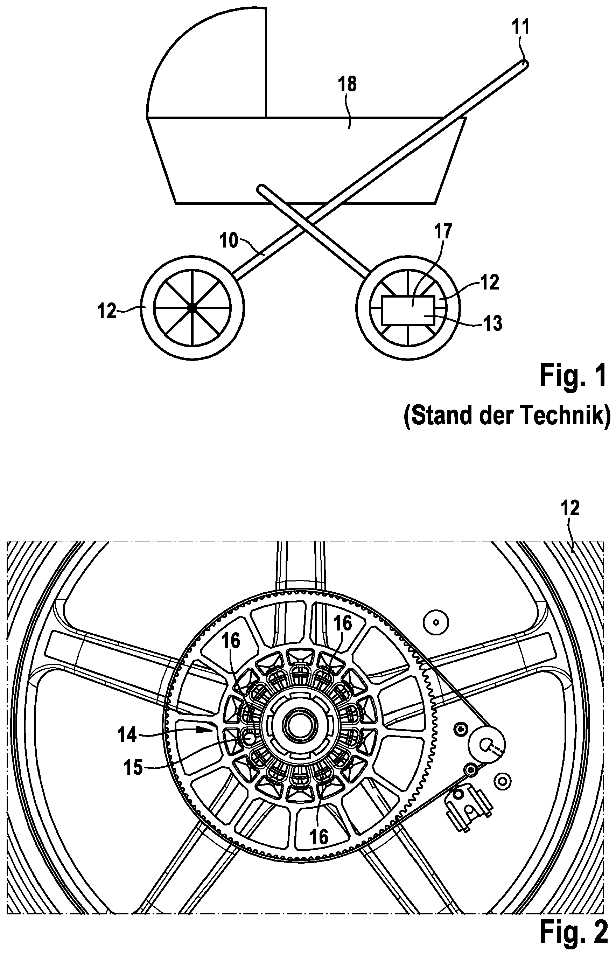

Die Erfindung ist auf alle Arten von Kinderwägen anwendbar, die ein Schaukeln durch Hin- und Herbewegen des Kinderwagens ermöglichen. So kann die Erfindung beispielsweise auf den in Fig. 1 (Stand der Technik) dargestellten klassischen Kinderwagen, auf Kindersportwagen, auf Buggys oder dergleichen Fahrzeuge, die dem Transport von Babys und Kleinkindern dienen, angewendet werden.

So weist der Kinderwagen vorzugsweise mindestens drei Räder auf, insbesondere mindestens zwei, vorzugsweise genau zwei, Hinterräder und mindestens ein Vorderrad, vorzugsweise genau ein Vorderrad oder genau zwei Vorderräder. Die Bremseinrichtung kann die Rotation mindestens eines der Räder, vorzugsweise eines Hinterrades oder beider Hinterräder erlauben (Fahrzustand) oder verhindern (Bremszustand). Vorzugsweise wird (zumindest) genau das (jeweilge) mindestens eine Rad angetrieben, an dem auch die Bremseinrichtung angreifen kann.

Ausführungsgemäß kann das Gestell weiterhin aufweisen, wobei die Liste nicht abschließend ist:
- mindestens ein hinteres Bein, vorzugsweise zwei hintere Beine;
- mindestens ein vorderes Bein, vorzugsweise genau ein oder genau zwei vordere Beine;
- eine Aufnahmeeinheit zur Aufnahme eines Kindes und/oder mindestens einen Adapter, der das lösbare Anbringen einer Aufnahmeeinheit zur Aufnahme eines Kindes erlaubt;
- eine die (beiden) Hinterräder verbindende Achse; und/oder
- ein Gelenk zur drehbaren Verbindung mindestens zweier Gestellabschnitte des Gestells, wobei vorzugsweise mindestens einer, vorzugsweise mindestens zwei und/oder alle der durch das Gelenk verbundenen Gestellabschnitte ausgewählt sind aus:
   - der Schieber
   - das mindestens eine hintere Bein
   - das mindestens eine vordere Bein.

Die Erfindung hängt nicht (unbedingt) von der genauen Ausgestaltung des Antriebs ab. Dies bedeutet, dass die für die Bewegungsumkehr erforderliche Änderung der Kraftrichtung bzw. der Drehmomentrichtung auf unterschiedliche Weise erfolgen kann. Die Erfindung setzt den Rahmen dafür, dass die motorisierte Bewegung nicht unkontrolliert in eine der beiden Fahrrichtungen bzw. in beide Fahrrichtungen erfolgen kann. Die Schaukelbewegung wird erfindungsgemäß nicht durch den Antrieb, sondern durch die Bremseinrichtung begrenzt, zumindest primär begrenzt.

Bevorzugte Ausführungsformen der Erfindung sind in den Unteransprüchen angegeben.

So kann die Bremseinrichtung eine Feststellbremse umfassen. Im Unterschied zu einer Verzögerungsbremse blockiert die Feststellbremse das gebremste Rad vollständig. Dies hat den Vorteil, dass die gewünschte Teilrotation im Bremszustand zwischen zwei Blockadestellungen der Räder erlaubt ist. Damit besteht die optimale Sicherheit beim automatischen Schaukeln gegen ungewolltes Bewegen des Kinderwagens.

Bei einer weiteren bevorzugten Ausführungsform kann die Bremseinrichtung mehrere Bremspositionen an unterschiedlichen Radwinkelpositionen aufweisen, die jeweils die in beiden Radumfangsrichtung begrenzte Rotation des gebremsten Rades ermöglichen. Dies hat den Vorteil, dass die automatische Schaukelfunktion bei (annähernd) jeder Radstellung möglich ist, genau wie beim klassischen, manuellen Schaukeln.

Die Bremseinrichtung und das (jeweilige) Rad weisen vorzugsweise mindestens ein (ggf. zwei) Paar(e) komplementärer (sich in mindestens einem Zustand berührende) Anschläge (Bewegungsanschläge; Anschlagsflächen) zur (mechanischen) Begrenzung der Rotation des Rades auf. Das (jeweilige) Paar kann ausgebildet werden durch: zwei Eingriffsvorsprünge (wobei mindestens ein Eingriffsvorsprung ggf. durch einen Pin gebildet wird); und/oder einen Eingriffsvorsprung (ggf. Pin) und eine (sich ggf. entlang eines Bogens, vorzugsweis Kreisbogens erstreckende) Eingriffsausnehmung, z. B. Eingriffsöffnung (insbesondere Eingriffsdurchgangsloch) oder Eingriffsvertiefung (insbesondere Eingriffssackloch). Zweckmäßigerweise weist die Bremseinrichtung mindestens oder genau ein Eingriffsmittel (z. B. Eingriffsvorsprung) und/oder mindestens oder genau eine Eingriffsausnehmung (insbesondere Eingriffsöffnung) auf, die mit einer entsprechenden Eingriffsausnehmung (insbesondere Eingriffsöffnung) bzw. einem entsprechenden Eingriffsmittel (z. B. Eingriffsvorsprung) des jeweiligen Rades zum Bremsen zusammen wirkt/wirken. Dadurch kann auf Standardbauteile für die Bremsfunktion zurückgegriffen werden, die für die Teilrotation relativ einfach modifiziert werden können. Im Wege der kinematischen Umkehr kann ein (jeweiliges) Eingriffsmittel (z. B. Eingriffsvorsprung) und/oder eine (jeweilige) Eingriffsausnehmung (insbesondere Eingriffsöffnung) an der Bremseinrichtung ausgebildet sein. Umgekehrt kann das Rad mindestens oder genau eine Eingriffsöffnung und/oder mindestens oder genau ein Eingriffsmittel (z. B. Eingriffsvorsprung) aufweisen (die entsprechend komplementär ausgebildet sind). Üblicherweise weist das Rad mindestens eine (ggf. die genau eine) Eingriffsöffnung und die Bremseinrichtung das (mindestens eine) komplementäre Eingriffsmittel auf.

Vorzugsweise ist ein Innenumfang und/oder eine (in Radumfangsrichtung verlaufende) Länge der (jeweiligen) Eingriffsausnehmung (insbesondere Eingriffsöffnung) zur Ausbildung eines Spiels in Radumfangsrichtung größer als ein Außenumfang bzw. eine (in Radumfangsrichtung verlaufende) Länge des Eingriffsmittels (Eingriffsvorsprungs). Das Spiel bzw. Bremsspiel ermöglicht bei dieser Ausführungsform die Teilrotation und damit die zum Schaukeln erforderliche Linearbewegung des Kinderwagens.

Vorzugsweise ist eine radiale Erstreckung der der (jeweiligen) Eingriffsausnehmung (insbesondere Eingriffsöffnung) gleichgroß wie oder größer als eine radiale Erstreckung zur Ausbildung eines Spiels in Radumfangsrichtung größer als ein Außenumfang bzw. eine (in Radumfangsrichtung verlaufende) Länge des Eingriffsmittels (Eingriffsvorsprungs).

Bei einer konkreten Ausführungsform kann das Eingriffsmittel einen Pin und/oder Stift umfassen und/oder die Eingriffsöffnung eine entsprechende Pinaufnahme bzw. Stiftaufnahme umfassen, wobei die Pinaufnahme eine Länge aufweist, die größer als der Pindurchmesser ist. Auch hier kann auf Standardbauteile zurückgegriffen werden, die durch relativ einfache Fertigungsmaßnahmen modifiziert werden, um das gewünschte Bremsspiel zu erreichen. Die Pinaufnahme kann sich in Längsrichtung entlang eines Radteilumfangs erstrecken. Dies hat den Vorteil, der Pin im Bremszustand in der Pinaufnahme wie in einer gekrümmten Führungsnut läuft bzw. geführt wird, deren Enden die Bewegungsanschläge, also die Grenzen des Spiels bilden. Es können mehrere Pinaufnahmen auf dem Umfang verteilt angeordnet sein, die entsprechend mehrere Eingriffs- bzw. Bremspositionen ermöglichen.

Pro gebremsten Rad kann (genau) ein Eingriffsmittel (insbesondere Eingriffsvorsprung z. B. Pin) und/oder eine Vielzahl von (z. B. mindestens drei oder mindestens acht und/oder höchstens 30 oder höchstens 18) Eingriffsausnehmungen (insbesondere Eingriffsöffnungen) vorliegen.

Pro gebremsten Rad kann eine Anzahl N (N ist gleich größer oder gleich 1) von Eingriffsmitteln (insbesondere Eingriffsvorsprüngen, z. B. Pins) und eine Vielzahl M von Eingriffsausnehmungen (insbesondere Eingriffsöffnungen) vorliegen, wobei vorzugsweise gilt M ≥ 2*N; ggf. M ≥ 5*N oder M ≥ 10*N; und/oder M ≤ 30*N.

In Ausführungsformen kann (mindestens) ein bestimmtes Eingriffsmittel (insbesondere Eingriffsvorsprung, z. B. Pin) mit mindestens drei oder mindestens acht und/oder höchstens 30 verschiedenen Eingriffsausnehmungen (insbesondere Eingriffsöffnungen) in Eingriff bringbar sein (insbesondere in entsprechenden verschiedenen einnehmbaren Zuständen, wobei in einem jeweiligen eingenommen Zustand vorzugsweise gilt, dass das Eingriffsmittel (insbesondere Eingriffsvorsprung, z. B. Pin) mit nur einer Eingriffsausnehmung (insbesondere Eingriffsöffnung) in Eingriff steht).

Der Antrieb kann wenigstens einen Motor, insbesondere einen Elektromotor, wenigstens eine Energiequelle, insbesondere eine Batterie oder Akkumulator, wenigstens einen Sensor und/oder eine Steuereinheit aufweisen. Der Motor kann auf einer Hinterachse des Gestells angeordnet oder als Nabenmotor ausgebildet sein. Zweckmäßigerweise ist der Antrieb oder ein Teil des Antriebs, insbesondere umfassend den Motor und/oder den Akkumulator, als abnehmbares Modul ausgebildet. Ein solches abnehmbares Modul kann auch andere Bauteile des Kinderwagens bzw. Gestells umfassen, wie etwa ein Rad.

Ein oder mehrere vorgesehene Sensoren können die Rotation bzw. einen Drehwinkel eines Rades, insbesondere des gebremsten Rades, detektieren bzw. messen. Alternativ oder zusätzlich kann ein vorgesehener Sensor detektieren, ob die Bremse aktiviert ist. Alternativ oder zusätzlich kann ein vorgesehener Sensor eine Motorbewegung (insbesondere die Drehung eines Elektromotors) detektieren bzw. messen.

Bei einer bevorzugten Ausführungsform ist die Steuereinheit zur Auswertung der detektierten Daten und Ansteuerung des Motors ausgebildet. Die ausführungsgemäße Konfiguration der Steuereinheit, die im Zusammenhang mit dem Kinderwagen als Teil der Vorrichtung offenbart und beansprucht wird, wird zusätzlich auch als Verfahren zum automatischen Schaukeln beschrieben und beansprucht. Die Vorteile und ausführungsgemäßen Einzelheiten der Steuerung werden im Zusammenhang mit den Verfahrensansprüchen offenbart und beschrieben. Die Ausführungen zu den Verfahrensansprüchen gelten gleichermaßen für die Konfiguration der Steuereinheit und werden als solche auch im Zusammenhang mit der Steuereinheit, also im Rahmen der Vorrichtung offenbart und beansprucht.

Alternativ oder zusätzlich zu dem Kinderwagen wird ein Gestell, insbesondere Fahrgestell für einen Kinderwagen (ggf. ohne Aufsatz zum Liegen und/oder Sitzen des Kindes, der ggf. separat bereitgestellt werden kann) offenbart und beansprucht, das im Übrigen dieselben erfindungsgemäßen Merkmale wie Anspruch 1 aufweist. Zu den Vorteilen wird deshalb auf die Ausführungen zu dem Kinderwagen verwiesen.

Das erfindungsgemäß Verfahren zum automatischen Schaukeln eines Kinderwagens mit Schaukelfunktion zeichnet sich dadurch aus, dass
- ein Bremszustand des Kinderwagens detektiert wird,
- eine Schaukelstrecke des Kinderwagens bei Betätigung der Schaukelfunktion durch einen Antrieb automatisch hin- und her gefahren wird und
- der Beginn und das Ende der Schaukelstrecke jeweils durch die Blockade wenigstens eines Rades begrenzt wird.

Das erfindungsgemäße Verfahren ist auf den Kinderwagen nach Anspruch 1 anwendbar. Der Vorteil des erfindungsgemäßen Verfahrens besteht darin, dass eine erhöhte Sicherheit gegen ungewolltes Verfahren des Kinderwagens beim automatischen Schaukeln gewonnen wird, da die Bremsfunktion der Schaukelfunktion übergeordnet ist und durch ein erhöhtes Spiel der Räder in Umfangsrichtung erweitert, aber nicht aufgehoben ist. Dies wird dadurch erreicht, dass der Beginn und das Ende der Schaukelstrecke jeweils durch die Blockade wenigstens eines Rades begrenzt wird. Weiter oben und nachfolgend beschrieben funktionale Merkmale des Kinderwagen bzw. Gestells können als konkrete Verfahrensschritte durchgeführt werden.

Bei einer besonders bevorzugten Ausführungsform der Erfindung wird die Leistung des Antriebs nach Beginn der Schaukelstrecke erhöht und vor Ende der Schaukelstrecke verringert. Dadurch wird ein sanftes Anfahren und Abbremsen des Kinderwagens erreicht und eine ruckartige Bewegung vermieden. Das damit verbundene Geschwindigkeitsprofil beim Schaukeln kommt der manuellen Schaukelbewegung besonders nahe. Dabei kann die Leistung des Antriebs nach 20%-80%, insbesondere 30%-60%, beispielsweise ca. 50% der Schaukelstrecke verringert werden.

Wenn die Leistung des Antriebs nach einer Haltezeit auf Null verringert wird, nachdem das Ende der Schaukelstrecke erreicht ist, befindet sich der Antrieb, insbesondere der Motor des Antriebs sicher im Stillstand, bevor die Richtungsumkehr aktiviert wird. Dies ist besonders bei der Verwendung eines Elektromotors sinnvoll.

Die Sicherheit beim automatischen Schaukeln wird dadurch weiter erhöht, dass der Antrieb abgeschaltet wird, wenn die maximale Schaukelstrecke durch den Kinderwagen überschritten wird. Die maximale Schaukelstrecke entspricht zumindest im wesentlichen der typischen Fahrlänge beim Hin- und Herbewegen des Kinderwagens durch manuelle Kraft. Die maximale Schaukelstrecke wird festgelegt durch die Blockade des wenigstens einen Rades zu Beginn und Ende der Schaukelstrecke. Zusätzlich zur Sicherheit durch die Begrenzung der Fahrbewegung durch die Bremseinrichtung wird die Leistung des Antriebs abgeschaltet, wenn ein Überschreiten der maximalen Schaukelstrecke (per se oder um mindestens einen vordefinierten Anteil der Schaukelstrecke, z.B. 5% - 50%) detektiert wird.

Vorzugsweise wird die Leistung des Antriebs jeweils bei Durchlaufen der Schaukelstrecke reziprok geändert, sodass dasselbe oder ein ähnliches Geschwindigkeitsprofil in beiden Fahrtrichtungen beim Schaukeln eingestellt wird.

Bei einer weiteren Ausführungsform des Verfahrens kann die Länge der Schaukelstrecke verstellt oder unterschiedlich groß eingestellt werden (wobei ein Maximalwert z. B. mindestens dem 2-fachen oder mindestens dem 5-fachen eines Minimalwertes entsprechen kann). Die Länge der Schaukelstrecke kann zudem während einer Schaukelperiode automatisch in kürzere oder längere Schaukelstrecken eingestellt werden. Aus der Praxis weiß man, dass man den Kinderwagen mal kürzer oder länger hin- und herschiebt, um das Kind zu beruhigen, und zwar auch während einer Schaukelphase.

Die vorstehend genannten Merkmale der bevorzugten Ausführungsformen des erfindungsgemäßen Verfahrens können auch durch eine entsprechende Konfiguration der Steuereinheit in den Ausführungsformen des erfindungsgemäßen Kinderwagens vorrichtungsmäßig implementiert werden. Die vorstehend genannten Verfahrensmerkmale werden insoweit auch im Zusammenhang mit einer entsprechend konfigurierten Steuereinheit offenbart und beansprucht.

Dabei wird die Eignung der Steuereinheit beansprucht, um die gewünschten Funktionen auszuführen. Beispielsweise ist die Steuereinheit so konfiguriert, dass die Länge der Schaukelstrecke verstellbar oder unterschiedlich groß einstellbar ist. Die Länge der Schaukelstrecke ist während einer Schaukelperiode automatisch in kürzere oder längere Schaukelstrecken einstellbar. Entsprechendes gilt auch für die anderen Verfahrensmerkmale.

Die nachstehend genannten Parameter der Steuerung der Schaukelfunktion können verstellbar und/oder unterschiedlich groß einstellbar sein.

Ausführungsgemäß können zur Steuerung der Schaukelfunktion verschiedene Parameter definiert sein, insbesondere:
- ein vordefinierter Anteil der Schaukelstrecke, wobei der vordefinierte Anteil der Schaukelstrecke 20%- 80%, insbesondere 30%-60%, beispielsweise ca. 50% der Schaukelstrecke betragen kann; und/oder
- eine reduzierte Motorleistung, wobei die reduzierte Motorleistung weniger als 30% der maximalen Motorleistung, vorzugsweise weniger als 20%, z.B. 5% - 15% der maximalen Motorleistung betragen kann.

Eine Frequenz, mit der die Sensoren arbeiten, kann bei 10 Hz - 200 Hz, vorzugsweise bei 20 Hz - 100 Hz, z.B. bei 50 Hz, liegen. Dies bedeutet, dass der jeweilge Sensor alle 5 ms - 100 ms, vorzugsweise alle 10 ms - 50 ms, z.B. alle 20 ms, einen neuen Wert detektiert. Es kann vorgesehen sein, dass unterschiedliche Sensoren mit unterschiedlichen Frequenzen arbeiten.

Es kann vorgesehen sein, dass die Schaukelfunktion in verschiedenen Modi betrieben werden kann, wobei sich die Modi z.B. durch die Frequenz der Schaukelfunktion unterscheiden können. Insbesondere können dazu verschiedenen Modi unterschiedlich starke Anstiege der Leistung nach Beginn der Schaukelstrecke zugeordnet sein, und/oder es können verschiedenen Modi unterschiedliche vordefinierte Anteile der Schaukelstrecke, nach deren Erreichen die Leistung des Antriebs verringert wird, zugeordnet werden. Konkret können zwei bis fünf, z.B. drei unterschiedliche Modi vorgesehen sein.

Es kann vorgesehen sein, die Motorleistung nach Beginn der Schaukelstrecke kontinuierlich (ggf. linear) ansteigen zu lassen, bis der vordefinierter Anteil der Schaukelstrecke zurückgelegt ist. Weiterhin kann es vorgesehen sein, die Motorleistung abrupt auf die reduzierte Motorleistung zu drosseln, wenn der vordefinierte Anteil der Schaukelstrecke zurückgelegt ist. Es kann weiterhin vorgesehen sein, die reduzierte Motorleistung konstant bis zum Ende der Schaukelstrecke beizubehalten.

Die für die Schaukelfunktion zur Verfügung stehende Motorleistung kann auf einen voreingestellten Anteil der maximalen Motorleistung, vorzugsweise mehr als 50% der maximalen Motorleistung, z.B. 70% - 80% der maximalen Motorleistung begrenzt sein. Es kann vorgesehen sein, bei Erreichen bzw. Überschreiten der für die Schaukelfunktion zur Verfügung stehende Motorleistung nur die reduzierte Motorleistung bereitzustellen, auch wenn der vordefinierte Anteil der Wegstrecke noch nicht zurückgelegt wurde.

Die Länge der Schaukelstrecke kann weniger als 20 cm, vorzugsweise weniger als 10 cm betragen. Zusätzlich oder alternativ kann die Länge der Schaukelstrecke mehr als 0,5 cm, vorzugsweise mehr als 1 cm betragen. Die Länge der Schaukelstrecke kann konkret im Bereich zwischen 2 cm und 7 cm liegen.

Die Rotation des durch die Bremseinrichtung gebremsten Rades kann auf höchstens 90° oder höchstens 50°, vorzugsweise höchstens 30° begrenzt sein. Es kann vorgesehen sein, dass für das durch die Bremseinrichtung gebremste Rad eine Rotation um wenigstens 1° oder wenigstens 2°, vorzugsweise wenigstens 4° möglich ist.

Es kann vorgesehen sein, dass (nachdem der vordefinierte Anteil der Schaukelstrecke zurückgelegt wurde) die reduzierte Motorleistung bereitgestellt wird, bis ein Sensor detektiert, dass keine Motorbewegung vorliegt (ggf. dass für eine vorbestimmte Zeit, z.B. 50 ms - 250 ms, keine Motorbewegung erfolgt ist, wobei die vorbestimmte Zeit der Haltezeit entsprechen kann).

Die Dauer eines vollen Zyklus (also des zweimaligen Durchlaufens der Schaukelstrecke, nämlich einmal "hin" und einmal "zurück") kann im Bereich zwischen 0,2 Sekunden und 10 Sekunden, vorzugsweise zwischen 0,5 Sekunden und 5 Sekunden liegen.

Es kann vorgesehen sein, dass ein Nutzer die Schaukelfunktion direkt am Motor ein- und ausschalten sowie ggf. einstellen kann, bevorzugt ist dies jedoch über eine am Schieber vorgesehene Bedieneinheit und/oder über eine App möglich. Hierzu kann eine drahtgebundene und/oder insbesondere eine drahtlose Verbindung vorgesehen sein.

Die Erfindung wird anhand eines Ausführungsbeispiels unter Bezug auf die beigefügten schematischen Figuren mit weiteren Einzelheiten näher erläutert.

In diesen zeigen
- Fig. 1: ein Beispiel für den Aufbau eines Kinderwagens mit Antrieb zur Schiebeunterstützung nach dem Stand der Technik;
- Fig. 2: eine Draufsicht auf ein gebremstes Rad mit einer Bremseinrichtung eines Kinderwagens nach einem erfindungsgemäßen Ausführungsbeispiel in einer ersten Position;
- Fig. 3: die Bremseinrichtung nach Fig. 2 in einer zweiten Position und
- Fig. 4: den Leistungsverlauf des Antriebs in Relation zur Radstellung eines Kinderwagens nach einem erfindungsgemäßen Ausführungsbeispiel.

Fig. 1 zeigt einen Kinderwagen nach dem Stand der Technik mit einem Antrieb 13, der im unteren Bereich des Gestells 10 des Kinderwagens angeordnet ist. Die Erfindung ist auf einen derartigen Kinderwagen anwendbar und ermöglicht die Implementierung einer automatischen Schaukelfunktion unter Benutzung des Antriebs 13, der bei dem bekannten Kinderwagen zusätzlich zur Unterstützung der Schiebefunktion vorgesehen ist. Der prinzipielle Aufbau des Kinderwagens nach dem erfindungsgemäßen Ausführungsbeispiel wird anhand des bekannten Kinderwagens beschrieben, der im Übrigen die Schaukelfunktion in Verbindung mit der erweiterten Bremsfunktion nicht zeigt.

Die Erfindung bzw. die Ausführungsbeispiele nach der Erfindung nutzen den für die Unterstützung der Schiebefunktion vorgesehenen Antrieb 13 zusätzlich dazu, um die automatische Schaukelfunktionen zu realisieren. Anstelle dieser Doppelfunktion des Antriebs 13 kann für die Schaukelfunktion ein gesonderter Antrieb vorgesehen sein. Die Doppelfunktion hat demgegenüber den Vorteil, dass der Kinderwagen kompakt gebaut und leicht ist, da die Anzahl der Antriebe 13 reduziert ist. Der Antrieb 13 kann für die automatische Schaukelfunktion des Kinderwagens entsprechend betätigt werden. Die Betätigung des Antriebs 13 kann dabei durch eine entsprechende Steuerung erfolgen. Jedenfalls ist der Antrieb 13 so ausgebildet, dass bei Betätigung des Antriebs 13 die Schaukelfunktion automatisch, d. h. ohne manuelles Zutun erfolgt. Dazu ermöglicht der Antrieb 13 eine automatische Umkehr der Fahrtrichtung wie beim Schaukeln eines Kinderwagens durch manuelle Krafteinwirkung.

Der Antrieb 13 umfasst bei dem Kinderwagen gemäß Fig. 1 einen Nabenmotor, der mit wenigstens einem der hinteren Räder 12 antriebsverbunden ist. Andere Motoren und Motoranordnungen sind möglich. Das Gestell 10 umfasst einen Schieber 11 mit einem Handgriff sowie Räder 12, die mit dem Gestell 10 drehbar verbunden sind. Auch hier sind unterschiedliche Ausgestaltungen des Gestells 10 möglich, beispielsweise Ausführungen mit drei oder vier Rädern. Die Erfindung ist nicht auf eine bestimmte Ausgestaltung des Gestells 10 eingeschränkt.

Der Antrieb 13 umfasst einen Motor 17 bspw. einen Elektromotor, eine Energiequelle wie etwa eine Batterie bzw. einen Akkumulator, einen oder mehrere Detektionseinheiten (Sensoren) und/oder eine Steuerung. Die Energiequelle, die Sensoren bzw. die Steuerung sind in Fig. 1 nicht dargestellt. Die Sensoren können zur Detektion einer Drehung des mindestens einen gebremsten Rades 12, insbesondere zur Messung eines Drehwinkels des gebremsten Rades 12 ausgebildet sein. Vorzugsweise können die Sensoren zusätzlich eine Drehung des Motors 17 detektieren. Mithilfe eines weiteren Sensors kann überwacht werden, ob die Bremseinrichtung 14, insbesondere die Feststellbremse aktiviert sind. Dies dient der Sicherheit, da bei nicht aktivierte Feststellbremse die Schaukelfunktion verhindert wird. Alternativ oder zusätzlich zu dieser Sicherheit kann die Geschwindigkeit des Kinderwagens oder andere entsprechende Parameter gemessen werden, um zu verhindern, dass die Schaukelfunktion beim Fahren des Kinderwagens ausgelöst wird.

Die Aufnahmeeinheit 18 dient dazu, ein Baby oder Kleinkind aufzunehmen und ist mit dem Gestell 10 verbunden, beispielsweise durch einen Adapter oder fest verbunden. Die Aufnahmeeinheit 18 ist vorzugsweise als Liegeeinheit, insbesondere als Liegewanne und/oder Babyschale ausgebildet. Sitzaufsätze, die ggf. in eine Liegeposition bewegt werden können, sind ebenfalls möglich.

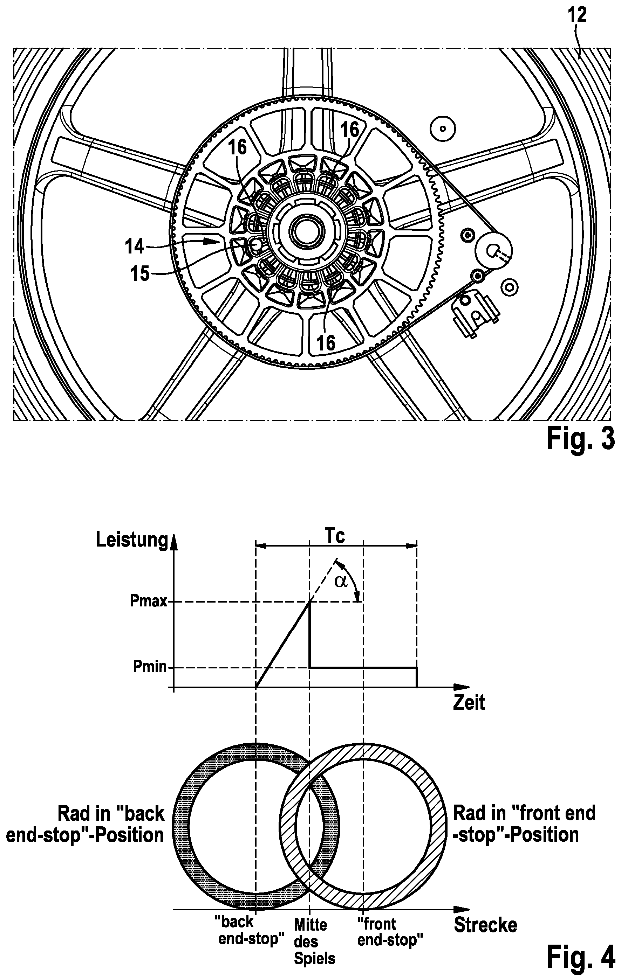

Die in Fig. 1 nicht dargestellte Steuereinheit ist zur Auswertung der durch die Sensoren detektierten Daten und daraus abgeleitet zur Ansteuerung der Antriebseinheit 13, insbesondere des Motors 17 ausgebildet. Ebenfalls in Fig. 1 nicht dargestellt ist die in Fig. 2, 3 gezeigte Bremseinrichtung 14, die in einen Fahrzustand und in einen Bremszustand überführt werden kann. Im Fahrzustand ist die Bremseinrichtung 14 gelöst und ermöglicht eine freie Radrotation, sodass der Kinderwagen ungehindert geschoben werden kann. Im Bremszustand der Bremseinrichtung 14 wird mindestens ein Rad 12 gebremst. Vorzugsweise wirken die Bremseinrichtung 14 und der Antrieb 13 auf ein- und dasselbe Rad 12. Die Bremseinrichtung 14 des Kinderwagens hat dabei so viel Spiel, dass eine lineare Bewegung bzw. eine Hin- und Herbewegung des Kinderwagens möglich ist, die im wesentlichen einer manuellen Schaukelbewegung entspricht. Dazu kann das durch die Bremseinrichtung 14 gebremste Rad 12 im Bremszustand in beiden Radumfangsrichtungen begrenzt rotiert werden.

Die Figuren 2, 3 zeigen ein Ausführungsbeispiel des erfindungsgemäßen Kinderwagens bzw. des erfindungsgemäßen Gestells für einen Kinderwagen, bei dem die Bremseinrichtung 14 so aufgebaut ist, dass Rotation des Rades, insbesondere des angetriebenen Rades 12, im Bremszustand begrenzt ermöglicht wird (Teilrotation). Dazu weist die Bremseinrichtung 14 ein Eingriffsmittel 15 auf, das bei dem Ausführungsbeispiel gemäß Fig. 2 als Stift bzw. Pin 15 ausgebildet ist. Der Pin 15 erstreckt sich parallel zur Nabenachse des Rades 12 und ragt bezogen auf das Gestell 10 nach außen vor, um mit einer komplementären Eingriffsöffnung 16 des Rades 12 interagieren zu können. Die Eingriffsöffnung 16 ist dabei als Pinaufnahme für den Pin 15 ausgebildet.

Bei der Bremseinrichtung 14 handelt es sich demnach um eine Feststellbremse, weil der Pin 15 in der Pinaufnahme bzw. Eingriffsöffnung 16 eine Drehung des Rades 12 blockiert.

Ein Vergleich der Figuren 2, 3 zeigt, dass der Pin 15 relativ zum Rad 12 bzw. zur Eingriffsöffnung 16 verschiedene Positionen einnimmt. Die unterschiedlichen Positionen des Pins 15 verdeutlichen das Bremsspiel der Bremseinrichtung 4, das bei dem Ausführungsbeispiel gemäß Figuren 2, 3 dazu genutzt wird, um die automatische, motorisierte Schaukelfunktion des Kinderwagens umzusetzen.

In Fig. 2 ist der Pin 5 in der unteren Position und schlägt an einer ersten Innenseite der Eingriffsöffnung 16 an. Damit wird eine Rotation des Rades 12 im Uhrzeigersinn (in der Ansicht gemäß Fig. 2) unterbunden. Fig. 3 zeigt die obere Position des Pins 15 in der Eingriffsöffnung 16, bei der der Pin 15 an einer zweiten Innenseite der Eingriffsöffnung 16 anschlägt. Damit wird eine Bewegung des Rades 16 im Gegenuhrzeigersinn verhindert. Die erste und zweite Innenseite der Eingriffsöffnung 16 sind einander in Umfangsrichtung des Rades 12 gegenüber angeordnet, sodass zwischen den beiden Innenseiten ein ausreichend großer Freiraum der Eingriffsöffnung 16 gebildet ist, in dem der Pin 15 relativ zum Rad 12 bzw. umgekehrt die gewünschte Teilrotation ausführen kann.

Mit anderen Worten ist die sich in Umfangsrichtung erstreckende Länge der Eingriffsöffnung 16 größer als der Durchmesser des Pins 15. Die erste und zweite Innenseite der Eingriffsöffnung 16, die die Teilrotation des Rades 12 im Bremszustand bestimmen, sind so weit voneinander beabstandet, dass die für die Schaukelbewegung gewünschte Schaukelstrecke des Kinderwagens durchfahren werden kann.

Die Breite der Eingriffsöffnung 16 erstreckt sich in radialer Richtung des Rades 12. Die Breite der Eingriffsöffnung 15 entspricht mindestens dem Durchmesser des Pins 15 bzw. ist größer als dieser.

Ausführungsgemäß kann der Pin 15 in einer Richtung senkrecht zur Zeichnungsebene der Figuren 2 und 3 in mindestens zwei Positionen bringbar, nämlich in eine erste Position, in der er in eine der Eingriffsöffnungen 16 eingreift, und in eine zweite, zurückgezogene Position, in der er außer Eingriff mit den Eingriffsöffnungen 16 ist.

Die Form der Eingriffsöffnung 16 ist nicht auf die in Figuren 2, 3 gezeigte Kontur beschränkt. Andere Formen sind möglich.

In den Figuren 2, 3 ist gut zu erkennen, dass auf dem Radumfang verteilt mehrere Eingriffsöffnungen 16 angeordnet sind, die identisch ausgebildet sind, sodass für den Pin 15 verschiedene Eingriffsmöglichkeiten bestehen. Der Schaukelfunktion ist aufgrund des übereinstimmenden Bremsspiels bzw. des der gleichen Länge der Eingriffsöffnungen 16 in jeder Position möglich.

Der Funktionsweise des Ausführungsbeispiels gemäß Fig. 2 bzw. Fig. 3 wird anhand des Graphen gemäß Fig. 4 erläutert. Fig. 4 verdeutlicht das Zusammenwirken des Antriebs 13 und der Bremseinrichtung 14.

Die obere Teilfigur in Fig. 4 zeigt beispielhaft den Leistungsverlauf des Antriebs 13 bzw. des Motors 17 über der Zeit im Bremszustand und beim automatischen Schaukeln. Die untere Teilfigur in Fig. 4 zeigt die entsprechenden Radstellungen des Rades 12 im Bremszustand während der Schaukelbewegung. Die Mittelpunkte der beiden Radstellungen entsprechen der maximalen Schaukelstrecke, also der linearen Bewegung des Kinderwagens beim Hin- und Herbewegen. Die beiden maximalen Radstellungen werden durch die Bremseinrichtung 4 definiert, die den Beginn und das Ende der in der unteren Teilfigur der Fig. 4 gezeigten Teilrotation des Rades 12 begrenzen. In der linken Position des Rades 12 in Fig. 4 schlägt der Pin 15 gemäß Fig. 3 an der einen Innenfläche der Eingriffsöffnung 16 an, sodass eine weitere Bewegung des Rades 12 verhindert wird (back end-stop). Dasselbe gilt für die andere Radposition (front end-Stop) in Fig. 4, die durch die den Anschlag des Pins 15 an der anderen Innenfläche der Eingriffsöffnung 16 definiert ist.

Die obere Teilfigur in Fig. 4 zeigt den Leistungsverlauf des Antriebs 13 bzw. des Motors 17, der das Geschwindigkeitsprofil der Radbewegung bestimmt. Nach Beginn der Schaukelstrecke steigt die Leistung zunächst mit der Steigung alpha auf einen Maximalwert Pmax an, bspw. auf 70% der gesamten Motorleistung. Der Maximalwert Pmax wird nach ungefähr der Hälfte der Schaukelstrecke erreicht, wie aus dem Vergleich mit der unteren Teilfigur gemäß Fig. 4 ersichtlich ist. Andere Zeitpunkte sind möglich. Nach Erreichen der maximalen Leistung Pmax fällt diese auf den Minimalwert Pmin, bspw. auf 7% der gesamten Motorleistung ab, die konstant bis zum Ende der Schaukelstrecke gehalten wird, so dass die Schaukelbewegung durch Anschlagen des Pins 15 an der Innenseite der Eingriffsöffnung 16 sanft abgebremst wird. Dabei wird die Leistung auf den Minimalwert Pmin während einer Haltezeit über das Anschlagen des Pins 15 an der Innenfläche der Eingriffsöffnung 16 hinaus gehalten, um zu erreichen, dass der Motor 17 stillsteht, bevor die Bewegungsumkehr eingeleitet wird.

Der Zeit Tc zwischen dem Start der Leistungerhöhung und dem Ende der Haltezeit definiert eine Schaukelphase, im Beispiel gemäß Fig. 4 eine Vorwärtsbewegung des Kinderwagens. Die Steigung alpha und die Zeit Tc der Schaukelphase beeinflussen zusammen die Schaukelbewegung. Je größer die Steigung und je kürzer die Zeit Tc, um so stärker ist die Schaukelbewegung. Für den gesamten Schaukelvorgang wird nach Ende der Haltezeit die Kraftrichtung umgedreht bzw. die Drehrichtung des Motors geändert, sodass eine reziproke Bewegung erfolgt, die in einer Rückwärtsbewegung des Kinderwagens resultiert. Dabei durchläuft die Leistung des Motors denselben Verlauf, wie in Fig. 4 gezeigten, aber eben in umgekehrter Richtung. Die Schaukelbewegung wird also insgesamt durch das Zusammenspiel der Bremsvorrichtung 4 im Bremszustand einerseits und andererseits durch den Antrieb 13 bzw. den zeitlichen Leistungsverlauf des Motors 17 bestimmt. Durch die Entkopplung der Abbremsung durch die Bremseinrichtung 4 einerseits und der Bewegung des Rades 16 durch den Antrieb 13 andererseits wird zusätzlich zu der Sicherheit während des automatischen Schaukeln die Verfahrensführung verbessert, weil der Motor 17 über den Anschlag der Bremseinrichtung 4 hinaus aktiviert ist, um eine sichere Bewegungsumkehr zu erreichen.

Das Verfahren nach dem gezeigten Ausführungsbeispiel kann folgende Schritte umfassen:
1. einschalten der Schaukelfunktion (durch Schalter oder über App)
2. detektieren, ob Feststellbremse aktiv (falls nein: Abbruch)
3. beaufschlagen des mindestens einen Rades mit einer Kraft durch den Motor, (ggf. lineare) Steigerung der Leistung des Motors
4. detektieren, wie weit Rad sich gedreht hat (mit ausreichend hoher Frequenz, z.B. 20 Hz - 100 Hz)
5. wenn gewünschter Anteil (20%-80% vorzugsweise 30%-60%, beispielsweise 50%) der vordefinierten Rotation erreicht ist, wird die Motorleistung reduziert (auf einen vordefinierten Wert, der weniger als 50%, vorzugsweise weniger als 30% der maximalen Motorleistung betragen kann, z.B. 7% oder 15%)
6. beibehalten der reduzierten Motorleistung bis der Motor sich nicht mehr dreht (weil ausführungsgemäß der Pin am Ende des Lochs anschlägt)
7. beaufschlagen des mindestens einen Rades mit einer Kraft (im Vergleich zu 3. In die entgegengesetzte Richtung) durch den Motor, (ggf. lineare) Steigerung der Leistung des Motors
8. Schritte 4. - 6., danach weiter mit 3.
9. Abbruch durch ein Ereignis aus folgender Liste: (nicht notwendig, dass alle genannten Abbruchkriterien implementiert werden)
   a. ausschalten der Schaukelfunktion
   b. deaktivieren der Feststellbremse
   c. Rotation überschreitet vorbestimmten Wert, insbesondere mehr als 100% der vordefinierten Rotation, z.B. 120% oder 150%
   d. Energie der Energiequelle sinkt auf oder unter vordefinierten Wert

Ausführungsgemäß kann die Motorleistung in 3. bzw. 7. auf einen vordefinierten Wert (insbesondere > 50% der maximalen Motorleistung und/oder < 90% der maximalen Motorleistung) beschränkt werden, beispielsweise 60%-80%, z.B. 70% oder 75%.

Ausführungsgemäß kann in 6. die reduzierte Motorleistung noch für eine vordefinierte Zeit gehalten werden (Haltezeit).

### Bezugszeichen

- 10: Gestell
- 11: Schieber
- 12: Räder
- 13: Antrieb
- 14: Bremseinrichtung
- 15: Eingriffsmittel
- 16: Eingriffsöffnung
- 17: Motor
- 18: Aufnahmeeinheit

## Patentansprüche

1. Kinderwagen mit einem Gestell (10), das einen Schieber (11) und Räder (12) zum Fahren des Kinderwagens aufweist, einem Antrieb (13), der mit wenigstens einem der Räder (12) antriebsverbunden ist, und einer Bremseinrichtung (14) für wenigstens ein Rad (12), die in einen Fahrzustand mit freier Radrotation und in einen Bremszustand mit wenigstens einem gebremsten Rad (12) überführbar ist, wobei der Antrieb (13) für eine automatische Schaukelfunktion des Kinderwagens betätigbar ist,
wobei das durch die Bremseinrichtung (14) gebremste Rad (12) im Bremszustand zum automatischen Schaukeln des Kinderwagens in beiden Radumfangsrichtungen begrenzt rotierbar ist,
**dadurch gekennzeichnet, dass** die Leistung des Antriebs (13):
- nach Beginn der Schaukelstrecke erhöht und vor Ende der Schaukelstrecke verringert wird und/oder
- nach 20%- 80%, insbesondere 30%-60%, beispielsweise ca. 50% der Schaukelstrecke verringert wird und/oder
- abgeschaltet wird, wenn ein Überschreiten einer maximalen Schaukelstrecke per se oder um mindestens einen vordefinierten Anteil der Schaukelstrecke detektiert wird.

2. Kinderwagen nach Anspruch 1
**dadurch gekennzeichnet, dass**
die Bremseinrichtung (14) eine Feststellbremse umfasst.

3. Kinderwagen nach Anspruch 1 oder 2
**dadurch gekennzeichnet, dass**
die Bremseinrichtung (14) mehrere Bremspositionen an unterschiedlichen Radwinkelpositionen aufweist, die jeweils die in beiden Radumfangsrichtungen begrenzte Rotation des gebremsten Rades (12) ermöglichen.

4. Kinderwagen nach einem der vorhergehenden Ansprüche
**dadurch gekennzeichnet, dass**
die Bremseinrichtung (14) ein Eingriffsmittel (15) und/oder eine Eingriffsausnehmung, insbesondere Eingriffsöffnung (16) aufweist/-en, die mit einer entsprechenden Eingriffsöffnung (16) bzw. einem entsprechenden Eingriffsmittel (15) des jeweiligen Rades (12) zum Bremsen zusammenwirkt/-en.

5. Kinderwagen nach Anspruch 4
**dadurch gekennzeichnet, dass**
ein Innenumfang der Eingriffsausnehmung, insbesondere Eingriffsöffnung (16), zur Ausbildung eines Spiels in Radumfangsrichtung größer als ein Außenumfang des Eingriffsmittels (15) ist.

6. Kinderwagen nach Anspruch 4 oder 5
**dadurch gekennzeichnet, dass**
das Eingriffsmittel (15) einen Pin und die Eingriffsausnehmung, insbesondere Eingriffsöffnung (16) eine entsprechende Pinaufnahme umfasst, wobei die Pinaufnahme eine Länge aufweist, die größer als der Pindurchmesser ist.

7. Kinderwagen nach Anspruch 6
**dadurch gekennzeichnet, dass**
die Pinaufnahme sich in Längsrichtung entlang eines Radteilumfangs erstreckt.

8. Kinderwagen nach einem der vorhergehenden Ansprüche
**dadurch gekennzeichnet, dass**
der Antrieb (13) wenigstens einen Motor (17), insbesondere einen Elektromotor, wenigstens eine Energiequelle, insbesondere eine Batterie oder Akkumulator, wenigstens einen Sensor und/oder eine Steuereinheit aufweist.

9. Kinderwagen nach Anspruch 8
**dadurch gekennzeichnet, dass**
der Motor (17) auf einer Hinterachse des Gestells (10) angeordnet oder als Nabenmotor ausgebildet ist.

10. Kinderwagen nach Anspruch 8 oder 9
**dadurch gekennzeichnet, dass**
der Antrieb (13) oder ein Teil des Antriebs (13), insbesondere umfassend den Motor (17) und/oder den Akkumulator, als abnehmbares Modul ausgebildet ist.

11. Kinderwagen nach einem der Ansprüche 8 bis 10
**dadurch gekennzeichnet, dass**
die Steuereinheit zur Auswertung der detektierten Daten und Ansteuerung des Motors (17) ausgebildet ist.

12. Kinderwagen nach einem der Ansprüche 8 bis 11
**dadurch gekennzeichnet, dass**
die Steuereinheit derart konfiguriert ist, dass
- ein Bremszustand des Kinderwagens detektiert wird,
- eine Schaukelstrecke des Kinderwagens bei Betätigung der Schaukelfunktion durch einen Antrieb (13) automatisch hin- und her gefahren wird und
- der Beginn und das Ende der Schaukelstrecke jeweils durch die Blockade wenigstens eines Rades (12) begrenzt wird.

13. Kinderwagen nach Anspruch 12
**dadurch gekennzeichnet, dass**
die Steuereinheit derart konfiguriert ist, dass die Leistung des Antriebs (13) nach Beginn der Schaukelstrecke erhöht und vor Ende der Schaukelstrecke verringert wird.

14. Kinderwagen nach Anspruch 12 oder 13
**dadurch gekennzeichnet, dass**
die Steuereinheit derart konfiguriert ist, dass die Leistung des Antriebs (13) nach 20%- 80%, insbesondere 30%-60%, beispielsweise 50% der Schaukelstrecke verringert wird.

15. Kinderwagen nach einem der Ansprüche 12 bis 14
**dadurch gekennzeichnet, dass**
die Steuereinheit derart konfiguriert ist, dass die Leistung des Antriebs (13) jeweils bei Durchlaufen der Schaukelstrecke reziprok geändert wird.

16. Verfahren zum Schaukeln eines Kinderwagens nach Anspruch 1, bei dem
- ein Bremszustand des Kinderwagens detektiert wird,
- eine Schaukelstrecke des Kinderwagens bei Betätigung der Schaukelfunktion durch einen Antrieb (13) automatisch hin- und her gefahren wird und
- der Beginn und das Ende der Schaukelstrecke jeweils durch die Blockade wenigstens eines Rades (12) begrenzt wird.

17. Verfahren nach Anspruch 16
**dadurch gekennzeichnet, dass**
die Leistung des Antriebs (13) nach Beginn der Schaukelstrecke erhöht und vor Ende der Schaukelstrecke verringert wird.

18. Verfahren nach Anspruch 17
**dadurch gekennzeichnet, dass**
die Leistung des Antriebs (13) nach 20%- 80%, insbesondere 30%-60%, beispielsweise ca. 50% der Schaukelstrecke verringert wird.

19. Verfahren nach einem der Ansprüche 16 bis 18
**dadurch gekennzeichnet, dass**
die Leistung des Antriebs (13) nach einer Haltezeit auf Null verringert wird, nachdem das Ende der Schaukelstrecke erreicht ist.

20. Verfahren nach einem der Ansprüche 16 bis 19
**dadurch gekennzeichnet, dass**
der Antrieb (13) abgeschaltet wird, wenn die maximale Schaukelstrecke durch den Kinderwagen überschritten wird.

21. Verfahren nach einem der Ansprüche 16 bis 20
**dadurch gekennzeichnet, dass**
die Leistung des Antriebs (13) jeweils bei Durchlaufen der Schaukelstrecke reziprok geändert wird.

22. Verfahren nach einem der Ansprüche 16 bis 21
**dadurch gekennzeichnet, dass**
die Länge der Schaukelstrecke verstellt oder unterschiedlich groß eingestellt wird.

23. Verfahren nach einem der Ansprüche 16 bis 22
**dadurch gekennzeichnet, dass**
die Länge der Schaukelstrecke während einer Schaukelperiode automatisch in kürzere oder längere Schaukelstrecken eingestellt wird.

## Claims

1. Pram having a frame (10), which comprises a push bar (11) and wheels (12) for driving the pram, a drive (13), which has a drive connection to at least one of the wheels (12), and a brake device (14) for at least one wheel (12), which is transferable into a driving state having free wheel rotation and into a braking state having at least one braked wheel (12), wherein the drive (13) is operable for an automatic rocking function of the pram,
wherein the wheel (12) braked by the brake device (14) is rotatable to a limited extent in both wheel circumferential directions in the braked state for automatic rocking of the pram, **characterized in that** the power of the drive (13):
- is increased after beginning the rocking route and is reduced before the ending of the rocking route and/or
- is reduced after 20% - 80%, in particular 30% - 60%, for example, approximately 50% of the rocking route and/or
- is switched off when it is detected that a maximum rocking route has been exceeded per se or by at least a predefined fraction of the rocking route.

2. Pram as claimed in claim 1,
**characterized in that**
the brake device (14) comprises a parking brake.

3. Pram as claimed in claim 1 or 2,
**characterized in that**
the brake device (14) has multiple brake positions at different wheel angular positions, each of which enables the rotation of the braked wheel (12) limited in both wheel circumferential directions.

4. Pram as claimed in any one of the preceding claims,
**characterized in that**
the brake device (14) comprises an engagement means (15) and/or an engagement recess, in particular an engagement opening (16), which interact(s) with a corresponding engagement opening (16) or a corresponding engagement means (15) of the respective wheel (12) for braking.

5. Pram as claimed in claim 4,
**characterized in that**
an internal circumference of the engagement recess, in particular the engagement opening (16), is larger than an external circumference of the engagement means (15) to form a play in the wheel circumferential direction.

6. Pram as claimed in claim 4 or 5,
**characterized in that**
the engagement means (15) comprises a pin and the engagement recess, in particular the engagement opening (16), comprises a corresponding pin receptacle, wherein the pin receptacle has a length which is greater than the pin diameter.

7. Pram as claimed in claim 6,
**characterized in that**
the pin receptacle extends in the longitudinal direction along a wheel partial circumference.

8. Pram as claimed in any one of the preceding claims,
**characterized in that**
the drive (13) comprises at least one motor (17), in particular an electric motor, at least one energy source, in particular a battery or accumulator, at least one sensor, and/or a control unit.

9. Pram as claimed in claim 8,
**characterized in that**
the motor (17) is arranged on the rear axle of the frame (10) or is designed as a hub motor.

10. Pram as claimed in claim 8 or 9,
**characterized in that**
the drive (13) or a part of the drive (13), in particular comprising the motor (17) and/or the accumulator, is designed as a removable module.

11. Pram as claimed in any one of claims 8 to 10,
**characterized in that**
the control unit is designed to evaluate the detected data and actuate the motor (17).

12. Pram as claimed in any one of claims 8 to 11,
**characterized in that**
the control unit is configured such that
- a braking state of the pram is detected,
- a rocking route of the pram is automatically traveled back and forth by a drive (13) during operation of the rocking function, and
- the beginning and the end of the rocking route are each bounded by the blocking of at least one wheel (12).

13. Pram as claimed in claim 12,
**characterized in that**
the control unit is configured such that the power of the drive (13) is increased after the beginning of the rocking route and reduced before the ending of the rocking route.

14. Pram as claimed in claim 12 or 13,
**characterized in that**
the control unit is configured such that the power of the drive (13) is reduced after 20% - 80%, in particular 30% - 60%, for example, 50% of the rocking route.

15. Pram as claimed in any one of claims 12 to 14,
**characterized in that**
the control unit is configured such that the power of the drive (13) is changed reciprocally in each case during passes through the rocking route.

16. Method for rocking a pram as claimed in claim 1, in which
- a braking state of the pram is detected,
- a rocking route of the pram is traveled back and forth automatically by a drive (13) during operation of the rocking function, and
- the beginning and the end of the rocking route are each bounded by blocking at least one wheel (12).

17. Method as claimed in claim 16,
**characterized in that**
the power of the drive (13) is increased after beginning the rocking route and reduced before the end of the rocking route.

18. Method as claimed in claim 17,
**characterized in that**
the power of the drive (13) is reduced after 20% - 80%, in particular 30% - 60%, for example, approximately 50% of the rocking route.

19. Method as claimed in any one of claims 16 to 18,
**characterized in that** the power of the drive (13) is reduced to zero after a stopping time, after the end of the rocking route is reached.

20. Method as claimed in any one of claims 16 to 19,
**characterized in that**
the drive (13) is switched off when the maximum rocking route is exceeded by the pram.

21. Method as claimed in any one of claims 16 to 20,
**characterized in that**
the power of the drive (13) is changed reciprocally during each pass through the rocking route.

22. Method as claimed in any one of claims 16 to 21,
**characterized in that**
the length of the rocking route is adjusted or set to different dimensions.

23. Method as claimed in any one of claims 16 to 22,
**characterized in that**
the length of the rocking route during a rocking period is set automatically to shorter or longer rocking routes.

## Revendications

1. Poussette avec un châssis (10) qui comporte un guidon (11) et des roues (12) pour déplacer la poussette, avec un entraînement (13) qui est en liaison d'entraînement avec au moins une des roues (12) et avec une installation de freinage (14) pour au moins une roue (12), qui peut être amenée dans un état de marche avec rotation libre des roues et dans un état de freinage avec au moins une roue (12) freinée, dans laquelle l'entraînement (13) peut être actionné pour une fonction de bercement automatique de la poussette, dans laquelle la roue (12) freinée par l'installation de freinage (14) est capable d'une rotation limitée dans les deux sens périphériques de la roue dans l'état freiné en vue du bercement automatique de la poussette, **caractérisée en ce que** la puissance de l'entraînement (13)
- est augmentée après le début de la course de bercement et réduite avant la fin de la course de bercement et/ou
- est réduite après 20 % à 80 %, en particulier 30 % à 60 %, par exemple environ 50 % de la course de bercement et/ou
- est arrêtée si un dépassement d'une course de bercement maximale, en soi ou d'au moins une partie prédéfinie de la course de bercement, est détecté.

2. Poussette selon la revendication 1, **caractérisée en ce que** l'installation de freinage (14) comprend un frein d'immobilisation.

3. Poussette selon la revendication 1 ou 2, **caractérisée en ce que** l'installation de freinage (14) comporte plusieurs positions de freinage dans différentes positions angulaires des roues, dont chacune permet une rotation limitée de la roue (12) freinée dans les deux sens périphériques de la roue.

4. Poussette selon l'une des revendications précédentes, **caractérisée en ce que** l'installation de freinage (14) comporte un moyen de prise (15) et/ou un évidement de prise, en particulier une ouverture de prise (16), qui coopère(nt) avec une ouverture de prise (16) correspondante ou un moyen de prise (15) correspondant de la roue (12) en question en vue du freinage.

5. Poussette selon la revendication 4, **caractérisée en ce qu'**une circonférence intérieure de l'évidement de prise, en particulier de l'ouverture de prise (16), est plus grande qu'une circonférence extérieure du moyen de prise (15) afin de créer un jeu dans le sens périphérique de la roue.

6. Poussette selon la revendication 4 ou 5, **caractérisée en ce que** le moyen de prise (15) comprend une goupille et l'évidement de prise, en particulier l'ouverture de prise (16), comprend un logement de goupille correspondant, lequel logement de goupille présente une longueur qui est plus grande que le diamètre de la goupille.

7. Poussette selon la revendication 6, **caractérisée en ce que** le logement de goupille s'étend dans le sens de la longueur le long d'une partie de circonférence de la roue.

8. Poussette selon l'une des revendications précédentes, **caractérisée en ce que** l'entraînement (13) comporte au moins un moteur (17), en particulier un moteur électrique, au moins une source d'énergie, en particulier une batterie ou un accumulateur, au moins un capteur et/ou une unité de commande.

9. Poussette selon la revendication 8, **caractérisée en ce que** le moteur (17) est disposé sur un essieu arrière du châssis (10) ou conçu comme un moteur monté sur moyeu.

10. Poussette selon la revendication 8 ou 9, **caractérisée en ce que** l'entraînement (13) ou une partie de l'entraînement (13), comprenant en particulier le moteur (17) et/ou l'accumulateur, est conçu comme un module amovible.

11. Poussette selon l'une des revendications 8 à 10, **caractérisée en ce que** l'unité de commande est conçue pour analyser les données détectées et commander le moteur (17).

12. Poussette selon l'une des revendications 8 à 11, **caractérisée en ce que** l'unité de commande est configurée de telle sorte que :
- un état de freinage de la poussette soit détecté,
- un entraînement (13) fasse parcourir automatiquement une course de bercement en va-et-vient à la poussette quand la fonction de bercement est actionnée et
- le début et la fin de la course de bercement soient limités chacun par un blocage d'au moins une roue (12).

13. Poussette selon la revendication 12, **caractérisée en ce que** l'unité de commande est configurée de telle sorte que la puissance de l'entraînement (13) soit augmentée après le début de la course de bercement et réduite avant la fin de la course de bercement.

14. Poussette selon la revendication 12 ou 13, **caractérisée en ce que** l'unité de commande est configurée de telle sorte que la puissance de l'entraînement (13) soit réduite après 20 % à 80 %, en particulier 30 % à 60 %, par exemple environ 50 % de la course de bercement.

15. Poussette selon l'une des revendications 12 à 14, **caractérisée en ce que** l'unité de commande est configurée de telle sorte que la puissance de l'entraînement (13) change en s'inversant après chaque parcours de la course de bercement.

16. Procédé pour le bercement d'une poussette selon la revendication 1, dans lequel
- un état de freinage de la poussette est détecté,
- un entraînement (13) fait parcourir automatiquement une course de bercement en va-et-vient à la poussette quand la fonction de bercement est actionnée et
- le début et la fin de la course de bercement sont limités chacun par un blocage d'au moins une roue (12).

17. Procédé selon la revendication 16, **caractérisé en ce que** la puissance de l'entraînement (13) est augmentée après le début de la course de bercement et réduite avant la fin de la course de bercement.

18. Procédé selon la revendication 17, **caractérisé en ce que** la puissance de l'entraînement (13) est réduite après 20 % à 80 %, en particulier 30 % à 60 %, par exemple environ 50 % de la course de bercement.

19. Procédé selon l'une des revendications 16 à 18, **caractérisé en ce que** la puissance de l'entraînement (13) est réduite à zéro après un temps d'arrêt après que la fin de la course de bercement a été atteinte.

20. Procédé selon l'une des revendications 16 à 19, **caractérisé en ce que** l'entraînement (13) est arrêté quand la poussette dépasse la course de bercement maximale.

21. Procédé selon l'une des revendications 16 à 20, **caractérisé en ce que** la puissance de l'entraînement (13) change en s'inversant après chaque parcours de la course de bercement.

22. Procédé selon l'une des revendications 16 à 21, **caractérisé en ce que** la longueur de la course de bercement est ajustée ou réglée à différentes grandeurs.

23. Procédé selon l'une des revendications 16 à 22, **caractérisé en ce que** la longueur de la course de bercement est automatiquement ajustée pendant une période de bercement en courses de bercement plus courtes ou plus longues.
